# EUROPÄISCHE PATENTANMELDUNG

(11) **EP 4 776 365 A1**
(43) Veröffentlichungstag der Anmeldung: **15.07.2026**
(21) Anmeldenummer: 26151023.4
(22) Anmeldetag: 09.01.2026
(51) Int. Cl.: H01M 10/04, H01M 10/48, H01M 50/503, H01M 50/526

(54) **BATTERIE UND VERFAHREN ZU IHRER ÜBERWACHUNG**

(30) Priorität: 10.01.2025 DE 102025100703
(71) Anmelder: Fraunhofer-Gesellschaft zur Förderung der angewandten Forschung e.V., 80686 München (DE)
(72) Erfinder: SCHADE, Wolfgang, 38640 Goslar (DE)
(74) Vertreter: Friese Goeden Patentanwälte PartGmbB

(57) **Zusammenfassung**

Die Erfindung betrifft eine Batterie (1) mit einer Mehrzahl von Batteriezellen (2), welche jeweils zumindest zwei Anschlusskontakte (25) aufweisen, wobei die Batteriezellen (2), mittels Zell-verbindern (4) seriell und/oder parallel miteinander verschaltet sind, wobei die Zellverbinder (4) auf die Anschlusskontakte aufge-legt sind und mittels zumindest einer Druckplatte (3) mit einer Andruckkraft beaufschlagt werden. Weiterhin betrifft die Erfindung ein Verfahren zum Betrieb einer solchen Batterie.

## Beschreibung

Die Erfindung betrifft eine Batterie mit einer Mehrzahl von Batteriezellen, welche jeweils zumindest zwei Anschlusskontakte aufweisen, wobei die Batteriezellen mittels Zellverbindern seriell und/oder parallel miteinander verschaltet sind. Solche Batterien können als stationärer Stromspeicher in Gebäuden oder als Traktionsbatterie von Fahrzeugen oder Booten eingesetzt werden.

Aus der US 12,119,460 B2 ist eine Batterie bekannt, welche aus einzelnen Batteriezellen zusammengesetzt ist. Die Zellverbinder werden mit den Anschlusskontakten der Batteriezellen verschweißt, um einen zuverlässigen elektrischen Kontakt auch bei mechanischer Beanspruchung sicherzustellen. Die Zellverbinder stehen in Kontakt mit einer Leiterplatte, welche eine Mehrzahl von elektrischen Leiterbahnen enthält und die einzelnen Batteriezellen mit einer Überwachungselektronik verbindet. Daneben können Teile der Überwachungselektronik auch auf der genannten Leiterplatte angeordnet sein.

Diese bekannte Batterie weist den Nachteil auf, dass die Herstellung der Batterie durch die Vielzahl an notwendigen Schweißverbindungen sehr zeitaufwendig ist. Wird von der Überwachungselektronik erkannt, dass einzelne Batteriezellen der Batterie schadhaft sind, so erfordert der Austausch einzelner Batteriezellen ein mechanisches Auftrennen der Zellverbinder, welche anschließend wieder verschweißt werden müssen. Damit ist auch die Reparatur aufwendig und in der Regel nur in Fachbetrieben möglich.

Ausgehend vom Stand der Technik liegt der Erfindung somit die Aufgabe zugrunde, eine Batterie anzugeben, welche mit geringem Aufwand herstellbar ist und einfach gewartet werden kann.

Nachfolgend wird eine Vorrichtung gemäß Anspruch 1 und ein Verfahren nach Anspruch 13 beschrieben. Vorteilhafte Weiterbildungen finden sich in den Unteransprüchen.

Gemäß einem Aspekt der vorliegenden Beschreibung wird eine Batterie mit einer Mehrzahl von Batteriezellen beschrieben, welche jeweils zumindest zwei Anschlusskontakte aufweisen, wobei die Batteriezellen, mittels Zellverbindern seriell und/oder parallel miteinander verschaltet sind, wobei die Batterie weiterhin eine optische Messeinrichtung enthält, welche zumindest einen Wellenleiter und zumindest eine temperaturempfindliche Messstelle enthält. Die optische Messeinrichtung kann sich auf einer Polymerfolie befinden, welche bei der Montage der Batterie auf die Mehrzahl von Batteriezellen aufgelegt wird.

Gemäß einem weiteren Aspekt der vorliegenden Beschreibung wird eine Batterie beschrieben. Die Batterie kann eine Mehrzahl von Batteriezellen aufweisen. Die Batteriezellen können Primär- oder Sekundärzellen sein. Die Batteriezellen können ein prismatisches Gehäuse oder ein zylindrisches Gehäuse aufweisen. In einigen Ausführungformen der Erfindung können die Batteriezellen eine mechanisch robuste Wandung aufwiesen. In anderen Ausführungformen der Erfindung können die Batteriezellen jeweils einen Folienbeutel als Gehäuse aufweisen und als Pouch-Zelle ausgebildet sein.

Jede Batteriezelle weist zumindest zwei Anschlusskontakte auf, wobei zumindest ein Anschlusskontakt als Plus-Pol und zumindest ein Anschlusskontakt als Minus-Pol der Batteriezelle ausgebildet ist. Die Batteriezelle ist somit ein elektrochemischer Energiespeicher, welcher in der Lage ist, eine elektrische Spannung und einen elektrischen Strom bereitzustellen.

Die einzelnen Batteriezellen der Mehrzahl von Batteriezellen können mittels Zellverbindern seriell und/oder parallel miteinander verschaltet sein. Die serielle Verschaltung einer Mehrzahl von Batteriezellen erhöht die Ausgangsspannung der Batterie. Durch die parallele Verschaltung von Batteriezellen kann der verfügbare Ausgangsstrom erhöht sein. In einigen Ausführungformen der Erfindung können mehrere Batteriezellen seriell zu einer Gruppe verschaltet sein, wobei eine Mehrzahl von Gruppen parallel verschaltet ist, um auf diese Weise Strom und Spannung der Batterie gegenüber dem verfügbaren Strom und der verfügbaren Spannung einer einzelnen Zelle zu erhöhen.

Die Zellverbinder können aus einem leitfähigen Material gefertigt sein. In einigen Ausführungformen der Erfindung können die Zellverbinder ein Metall oder eine Legierung enthalten oder daraus bestehen. In einigen Ausführungformen der Erfindung können die Zellverbinder Kupfer, Nickel, Silber und/oder Edelstahl enthalten oder daraus bestehen. Die Zellverbinder können mit einer Beschichtung versehen sein, welche beispielsweise Nickel, Silber oder Gold enthalten kann oder daraus besteht. Die Zellverbinder können eben sein oder eine gekröpfte Form aufweisen. Bei Verbindung benachbarter Batteriezellen können die Zellverbinder geradlinig verlaufen. In anderen Ausführungformen können die Zellverbinder auch eine gekrümmte Form aufweisen, um beispielsweise übernächste Nachbarn innerhalb der Batterie zu verbinden. In einigen Ausführungformen der Erfindung können die Zellverbinder als gestanztes Blechteil hergestellt sein.

In einigen Ausführungformen der Erfindung wird nun vorgeschlagen, die Zellverbinder auf die Anschlusskontakte der Batteriezellen aufzulegen und mittels zumindest einer Druckplatte mit einer Andruckkraft zu beaufschlagen. In einigen Ausführungformen der Erfindung kann somit auf eine Schweißverbindung zwischen den Zellverbindern und den Anschlusskontakten der Batteriezellen verzichtet werden. Gleichwohl sorgt die durch die Druckplatte erzeugte Andruckkraft für einen zuverlässigen elektrischen Kontakt und hinreichende mechanische Stabilität, welche ein Verrutschen der Zellverbinder bei mechanischer Belastung vermeidet. Durch die fehlende Schweißverbindung kann die vorgeschlagene Batterie in kürzerer Zeit gefertigt werden. Weiterhin können einzelne, schadhafte Batteriezellen rasch ausgetauscht werden, indem die Andruckplatte und ein Teil der Zellverbinder entfernt wird. Nach dem Ersetzen der schadhaften Batteriezelle muss der Zellverbinder nur wieder aufgelegt und die Druckplatte befestigt werden. Eine aufwendige mechanische Bearbeitung der Schweißverbindung und ein aufwendiges Verschweißen der Zellverbinder ist nicht mehr erforderlich. Dies erlaubt die Reparatur der Batterie auch außerhalb spezialisierter Werkstätten und durch unqualifiziertes Personal.

In einigen Ausführungformen der Erfindung kann die Druckplatte Ausnehmungen aufweisen, in welche die Zellverbinder zumindest teilweise aufgenommen sind. Durch die Ausnehmungen wird einerseits die Positionierung der Zellverbinder erleichtert, da diese durch das Einlegen in die Ausnehmungen an vorgebbaren Stellen positioniert werden. Weiterhin kann die durch die Druckplatte erzeugte Andruckkraft auf den Bereich der Anschlusskontakte der Batteriezellen konzentriert werden, ohne dass die Zellverbinder an anderen, nicht dem Stromfluss dienenden Gehäuseteilen der Batteriezellen anliegen.

In einigen Ausführungformen können die Zellverbinder Kontaktelemente aufweisen, welche mit den zugeordneten Anschlusskontakten der Batteriezellen formschlüssig verbunden sind. Die Kontaktelemente können beispielsweise Federelemente aufweisen, welche nach Art eines Druckknopfes die Anschlusskontakte der Batteriezellen umgreifen und so einen sicheren elektrischen Kontakt ermöglichen. Die durch die Druckplatte erzeugte Andruckkraft kann in diesem Fall niedriger sein, weil diese nur das unerwünschte Abziehen bzw. Lösen der Kontaktelemente verhindern muss.

In einigen Ausführungformen der Erfindung können die Batteriezellen ausgewählt sein aus einer Natrium-Ionen-Batteriezelle oder einer Lithium-Ionen-Batteriezelle oder einer Lithium-Eisenphosphat-Batteriezelle. Diese Batteriezellen weisen lange Lebensdauern, hohe Energiedichten und eine hohe Zyklenfestigkeit auf, so dass ein dauerhafter Betrieb der Batterie ermöglicht wird.

In einigen Ausführungformen der Erfindung kann eine Mehrzahl von Zellverbindern mit einem Träger verbunden sein. Der Träger kann aus einem isolierenden Material gefertigt sein oder ein isolierendes Material enthalten. Die Zellverbinder können auf dem Träger verklebt oder verlötet oder verschweißt sein. Hierdurch kann die Montage der Batterie erleichtert sein, weil durch Auflegen des zumindest einen Trägers eine Mehrzahl von Batteriezellen miteinander in gewünschter Weise verschaltet wird, ohne dass die Zellverbinder einzeln aufgelegt werden müssen. Der Träger kann darüber hinaus in einigen Ausführungsformen weitere elektrische Leiterbahnen aufweisen, welche eine elektrische Verbindung der Zellverbinder mit einem Batteriemanagementsystem ermöglichen, beispielsweise um die Zellspannung und/oder den Ladestrom und/oder den Entladestrom der einzelnen Batteriezellen zu erfassen.

In einigen Ausführungformen der Erfindung kann eine Mehrzahl von Zellverbindern mit einem Träger verbunden sein, welcher eine erste Polymerfolie enthält oder daraus besteht. Ein solches Folienmaterial kann aufgrund seiner Flexibilität dazu geeignet sein, Vibrationen und/oder mechanische Spannungen aufzunehmen, ohne dass der Träger bei der Montage oder dem Betrieb der Batterie beschädigt wird. Darüber hinaus kann eine solche Polymerfolie als flexible Leiterplatte dienen, welche die elektrischen Kontakte zu einem Batteriemanagementsystem herstellt.

In einigen Ausführungformen der Erfindung kann die Mehrzahl von Zellverbindern durch eine strukturierte Metallschicht auf dem Träger gebildet sein, wobei der Träger eine erste Polymerfolie enthält oder daraus besteht. Die Herstellung und Montage der Batterie kann zusätzlich vereinfacht sein, wenn die Zellverbinder nicht als diskrete Elemente bereitgestellt werden, sondern wenn die Zellverbinder integraler Bestandteil des Trägers sind. Hierzu kann eine Metallschicht auf dem Träger abgeschieden und durch Maskieren und Ätzen strukturiert werden, so dass diese auf einer Anordnung von Batteriezellen aufgelegt werden kann, um die Batteriezellen in gewünschter Weise zu verschalten. In einigen Ausführungformen der Erfindung kann die Metallschicht Nickel und/oder Kupfer enthalten oder daraus bestehen.

In einigen Ausführungformen der Erfindung kann die erste Polymerfolie weiterhin eine optische Messeinrichtung enthalten, welche zumindest einen Wellenleiter und zumindest eine temperaturempfindliche Messstelle enthält. Durch die optische Erfassung von Temperaturen innerhalb der Batterie wird die Temperaturmessung nicht durch die beim Laden bzw. Entladen der Batterie anliegenden hohen Ströme und die dadurch erzeugten magnetischen Felder gestört. Die Temperaturerfassung kann dadurch mit erhöhter Genauigkeit erfolgen. Indem die zur Temperaturerfassung notwendigen Wellenleiter unmittelbar in die erste Polymerfolie eingebracht werden, werden zusätzliche Komponenten zur Temperaturerfassung eingespart und der Aufbau der Batterie vereinfacht.

In einigen Ausführungformen der Erfindung kann die Batterie weiterhin eine zweite Polymerfolie enthalten, welche eine optische Messeinrichtung enthält, welche zumindest einen Wellenleiter und zumindest eine Messstelle enthält. Die Messstelle kann eine temperaturempfindliche Messstelle sein. Durch die räumliche Trennung des Trägers der Zellverbinder einerseits und der optischen Messeinrichtung andererseits lassen sich beide Bauteile der Batterie im Schadensfall getrennt voneinander austauschen. Durch den modularen Aufbau kann die Wartung der Batterie erleichtert sein.

In einigen Ausführungformen der Erfindung kann der zumindest eine Wellenleiter ein Multimode-Wellenleiter sein. Dies erlaubt es, die Messstellen mit breitbandigem Licht abzufragen, so dass eine Mehrzahl unterschiedlicher Messstellen im Wellenlängenmultiplex unterschieden werden kann. In anderen Ausführungsformen kann der Schadensfall mit einer einfachen Intensitätsmessung transmittierten Lichtes erkannt werden.

In einigen Ausführungformen der Erfindung kann der zumindest eine Wellenleiter durch Prägen in die erste und/oder zweite Polymerfolie eingebracht sein. Das mechanische Prägen der Folie ermöglicht eine einfache und kostengünstige Herstellung, so dass die vorgeschlagene Batterie auch für den Massenmarkt geeignet ist.

In einigen Ausführungformen der Erfindung kann die Messstelle zumindest ein Bragg-Gitter enthalten. Das Bragg-Gitter besteht aus einer Mehrzahl von Raumbereichen innerhalb des Wellenleiters, welche einen gegenüber dem umgebenden Material verändernden Brechungsindex aufweisen. Durch den Abstand dieser Raumbereiche ist die Gitterkonstante des Bragg-Gitters definiert. Licht mit einer durch die Gitterkonstante definierten Wellenlänge wird am Bragg-Gitter reflektiert, wohingegen Licht anderer Wellenlängen transmittiert wird. Da sich die Gitterkonstante bei thermischer Ausdehnung der Polymerfolie ändert, können mittels Bragg-Gittern Temperaturen erfasst werden. Unterschiedliche Messstellen, welche an unterschiedlichen Orten innerhalb der Polymerfolie bzw. innerhalb der Batterie angeordnet sind, können beispielsweise durch Wellenlängenmultiplex oder durch die Laufzeit optischer Signale zugeordnet werden.

In einigen Ausführungformen der Erfindung kann die Messstelle thermochrom funktionalisiert sein. Ein thermochromer Farbstoff verändert seine Farbe und damit das Absorptionsverhalten in Abhängigkeit der Temperatur bzw. beim Überschreiten einer vorgebbaren Grenztemperatur. Da sich somit das Transmissionsverhalten des Wellenleiters in Abhängigkeit der Temperatur verändert, kann eine Übertemperatur innerhalb der Batterie erkannt werden.

In einigen Ausführungformen der Erfindung kann die Messstelle zumindest einen Leukofarbstoff oder ein Flüssigkristall enthalten. Solche Farbstoffe zeigen thermochrome Eigenschaften und sind daher grundsätzlich zur Temperatur-überwachung der Batterie geeignet. Die Leukofarbstoffe können vielfältige Farbumschläge in einem weiten Temperaturbereich aufweisen, so dass der Farbstoff an die konkret verwendeten Batteriezellen angepasst werden kann. Der Farbstoff kann als mikrogekapseltes System aus mehreren Komponenten vorliegen.

In einigen Ausführungformen der Erfindung kann die Messstelle bei Überschreiten einer vorgebbaren Temperatur irreversibel verfärbt werden. Dies bedeutet, dass die Verfärbung der thermochromen Messstelle auch dann bestehen bleibt, wenn die Temperatur wieder sinkt. Hierdurch kann der Ort der Übertemperatur und damit die mutmaßlich defekte Batteriezelle nach dem Entfernen der Druckplatte in einfacher Weise optisch erkannt werden, ohne dass zusätzliche Messgeräte erforderlich sind. Sofern die Zellverbinder in vorgeschlagener Weise nicht mit den Batteriezellen verschweißt sind, kann die Batteriezelle sodann werkzeuglos ausgetauscht werden. Sodann kann vorteilhaft auch die zweite Polymerfolie mit der optischen Messeinrichtung erneuert werden, um die Zellen der so instandgesetzten Batterie wiederum auf Übertemperaturen zu überwachen.

In einigen Ausführungformen der Erfindung kann die erste und/oder zweite Polymerfolie ein duroplastisches Harz oder eine thermoplastische Matrix enthalten. Diese Materialien sind elektrisch isolierend, so dass diese keine Kurzschlüsse innerhalb der Batterie hervorrufen. Weiterhin sind diese leicht bearbeitbar, so dass in einfacher Weise Wellenleiter eingebracht werden können, beispielsweise durch optische Materialbearbeitung oder durch mechanisches Prägen. Schließlich können diese Materialien in einfacher Weise thermochrom funktionalisiert werden, um die Messstellen innerhalb der Polymerfolie auszubilden.

In einigen Ausführungformen der Erfindung kann die erste und/oder zweite Polymerfolie Polypropylen, Polyethylen, Acrylnitril-Butadien-Styren, Polyvinylchlorid und/oder zumindest ein thermoplastisches Elastomer enthalten oder daraus bestehen. Diese Materialien können bei vergleichsweise niedriger Temperatur bearbeitet werden, so dass die thermochromen Farbstoffe nicht bereits bei der Herstellung der Polymerfolien verfärbt werden.

In einigen Ausführungformen der Erfindung können die Messstellen über den Anschlusskontakten der Batteriezellen angeordnet sein. Auf diese Weise kann die Temperatur der jeweiligen Batteriezelle erfasst werden, so dass schadhafte Batteriezellen mit erhöhtem Innenwiderstand aufgrund ihrer höheren Zelltemperatur detektierbar sind.

In einigen Ausführungformen der Erfindung kann der Wellenleiter ein erstes Ende aufweisen, welches mit einer breitbandigen Lichtquelle gekoppelt ist und ein zweites Ende aufweisen, welches mit einer Fotodiode gekoppelt ist. Somit kann die Transmission durch den Lichtwellenleiter bestimmt werden, welche sich bei erhöhter Temperatur ändert, wenn die thermochrom funktionalisierten Messstellen ihre Farbe und damit die Absorption ändern. Als breitbandige Lichtquelle kann eine Superlumineszenzdiode oder eine weiße Leuchtdiode verwendet werden.

In einigen Ausführungformen der Erfindung kann der Wellenleiter ein erstes Ende aufweisen, welches mit einer breitbandigen Lichtquelle und einer Fotodiode gekoppelt ist und das zweite Ende kann verspiegelt sein. Dies erlaubt eine einfache Signalauslese, weil nur ein Ende des Wellenleiters mit der Auswerteelektronik gekoppelt werden muss. Da das Licht die Messstellen zweifach durchläuft, kann der Kontrast des Messsignals vergrößert sein.

In einem weiteren Aspekt der vorliegenden Beschreibung betrifft diese ein Verfahren zur Überwachung einer Batterie, wie vorstehend beschrieben, wobei das Verfahren die folgenden Schritte umfasst: Einkoppeln von Licht in ein erstes Ende von zumindest einem Wellenleiter, Erfassen des aus dem Wellenleiter austretenden Lichtes und Bestimmen einer Intensitätsänderung über die Zeit. Bei der Abnahme der Intensität kann auf zumindest eine schadhafte Batteriezelle geschlossen werden, weil das im Wellenleiter propagierende Licht durch die thermochrom funktionalisierten Messstellen absorbiert wird, wenn die Temperatur über einen vorgebbaren Wert ansteigt.

Nachfolgend soll die Erfindung anhand von Figuren ohne Beschränkung des allgemeinen Erfindungsgedankens näher erläutert werden. Dabei zeigt:
Figur 1 eine Batterie gemäß einem Aspekt der vorliegenden Erfindung.
Figur 2 zeigt eine Ausführungform einer Druckplatte und eines Zellverbinders.
Figur 3 zeigt einen Träger mit einem Zellverbinder und Kontaktelementen.
Figur 4 zeigt eine optische Messeinrichtung.

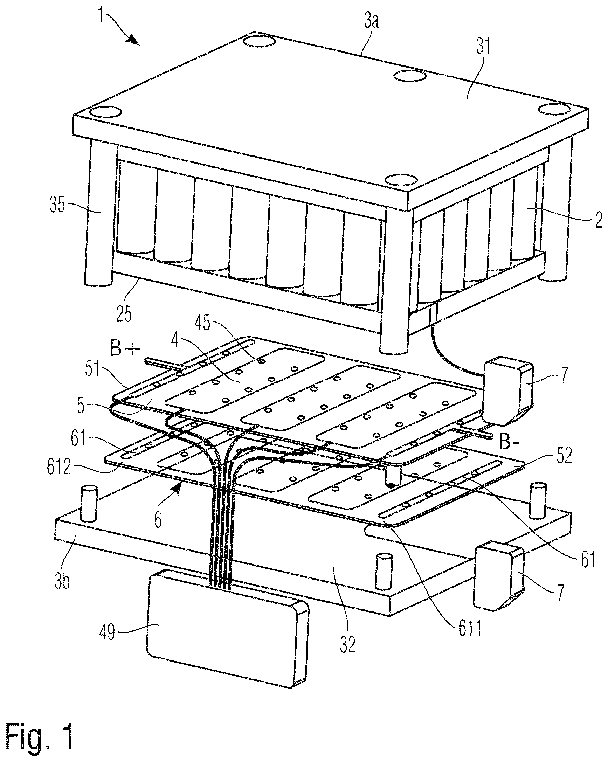

Anhand der Figur 1 wird eine Ausführungform einer Batterie näher erläutert. Die Batterie 1 weist eine Mehrzahl von Batteriezellen 2 auf, welche jeweils zwei Anschlusskontakte 25 aufweisen. Im dargestellten Ausführungsbeispiel sind die Batteriezellen 2 Rundzellen mit zylindrischer Grundform, wobei die Anschlusskontakte jeweils an Grund- und Deckfläche angeordnet sind. In anderen Ausführungformen der Erfindung können die Batteriezellen 2 jedoch auch eine andere Bauform aufweisen. Die Erfindung lehrt nicht die Verwendung von Rundzellen als Lösungsprinzip.

Die Batteriezellen sind bevorzugt wiederaufladbare Batteriezellen, beispielsweise Natrium-Ionen-Batteriezellen oder Lithium-Ionen-Batteriezellen oder Lithium-Eisenphosphat-Batteriezellen.

Die Mehrzahl von Batteriezellen 2 innerhalb der Batterie 1 können seriell und/oder parallel miteinander verschaltet sein. Hierdurch kann der Ausgangsstrom und/oder die Ausgangsspannung der Batterie 1 größer sein als Strom und Spannung einer einzelnen Batteriezelle 2.

Zur seriellen und/oder parallelen Verschaltung stehen Zellverbinder 4 zur Verfügung, welche die jeweiligen Anschlusskontakte 25 der Batteriezellen 2 kontaktieren und auf diese Weise benachbarte Batteriezellen miteinander verbinden, so dass sich die gewünschte serielle bzw. parallele Verschaltung ergibt. Im dargestellten Ausführungsbeispiel sind die Zellverbinder 4 mit einem optionalen Träger 5 verbunden. Der Träger 5 enthält eine erste Polymerfolie 51, wobei die Zellverbinder 4 durch eine strukturierte Metallschicht auf dem Träger 5 gebildet sind. In anderen Ausführungformen der Erfindung kann statt der ersten Polymerfolie 51 auch eine Leiterplatte aus glasfaserverstärktem Kunststoff oder Keramik eingesetzt werden. Die strukturierte Metallschicht auf dem Träger 5 kann beispielsweise durch Sputtern oder Aufdampfen erzeugt und optional durch außenstromloses oder galvanisches Abscheiden verstärkt werden. Die Strukturierung kann durch Maskieren und nachfolgendes Ätzen in an sich bekannter Weise erfolgen. Hierdurch entstehen auf der Oberfläche des Trägers metallisierte Teilflächen, welche als Zellverbinder verwendbar sind und unmetallisierte Teilflächen, welche der elektrischen Isolation benachbarter Zellverbinder dienen.

Figur 1 zeigt weiterhin optionale Kontaktelemente 45 auf den Zellverbindern 4. Im einfachsten Fall können die Kontaktelemente 45 gegenüber der Ebene des Zellverbinders 4 erhaben sein, um einen zuverlässigen Kontakt zu den Anschlusskontakten 25 der Batteriezellen 2 auszubilden. In anderen Ausführungformen der Erfindung können die Kontaktelemente federnde Kontakte enthalten, welche formschlüssig in die zugeordneten Anschlusskontakte der Batteriezellen 2 eingreifen und die elektrische Verbindung ähnlich einem an sich bekannten Steckverbinder oder einem Druckknopf sichern.

Der Träger 5 kann weiterhin eine Mehrzahl von optionalen Leiterbahnen aufweisen, welche dazu eingerichtet sind, die Zellverbinder und/oder die einzelnen Batteriezellen mit einem Batteriemanagementsystem 49 zu verbinden. Daneben können Teile des Batteriemanagementsystem 49 auch auf dem Träger 5 angeordnet sein.

Figur 1 zeigt weiterhin ein optionales Batteriemanagementsystem 49. Dieses ist mittels Kabelverbindungen mit den Zellverbindern 4 verbunden. Das Batteriemanagementsystem 49 kann dazu eingerichtet und bestimmt sein, die Lade- oder Entladeströme, die Zellspannung, die Anzahl der Lade-/Entlade-Zyklen oder weitere, den Status der Batteriezellen 2 repräsentierende Messwerte zu erfassen. In einigen Ausführungformen der Erfindung kann das Batteriemanagementsystem 49 dazu eingerichtet und bestimmt sein, die Ladung und/oder Entladung der Batterie 1 zu steuern oder zu regeln.

Weiterhin zeigt Figur 1 eine optische Messeinrichtung 6. Die optische Messeinrichtung 6 umfasst eine zweite Polymerfolie 52. Die zweite Polymerfolie 52 hat in etwa die gleichen Abmessungen wie die erste Polymerfolie 51 und ist innerhalb der Batterie 1 parallel zu dieser angeordnet. In einigen Ausführungformen der Erfindung kann die zweite Polymerfolie 52 unmittelbar auf der ersten Polymerfolie 51 zu liegen kommen.

In der zweiten Polymerfolie 52 ist zumindest ein Wellenleiter 61 eingebracht. Der Wellenleiter 61 kann durch Prägen oder optische Fertigungsverfahren, wie beispielsweise Punktzu-Punkt-Laserbelichten oder eine Maskenbelichtung in die zweite Polymerfolie 52 eingebracht werden. In einigen Ausführungformen der Erfindung können mehrere Wellenleiter 61 vorhanden sein.

Der Wellenleiter 61 weist ein erstes Ende 611 und ein zweites Ende 612 auf. In einigen Ausführungformen der Erfindung wird Licht, bevorzugt breitbandiges Licht, über das erste Ende 611 in den Wellenleiter 61 eingekoppelt. Am zweiten Ende 612 befindet sich ein optischer Detektor, welcher das durch den Wellenleiter 61 geleitete Licht erfasst. In anderen Ausführungformen, wie in Figur 1 dargestellt, ist das zweite Ende 612 des Wellenleiters 61 verspiegelt, so dass das Licht vom ersten Ende 611 im Wellenleiter 61 propagiert bis zu dessen zweiten Ende 612. Dort wird das reflektierte Licht in die Einfallsrichtung zurückgeworfen und verlässt den Wellenleiter 61 durch das erste Ende 611.

Das Licht wird mittels einer Lichtquelle 7 erzeugt, welche beispielsweise eine Weißlicht-LED oder eine Superlumineszenzdiode oder einen Halbleiterlaser enthalten kann.

Innerhalb der zweiten Polymerfolie 52 befindet sich eine Mehrzahl von Messstellen 62, welche dazu eingerichtet und bestimmt sind, die Temperatur bzw. eine Temperaturverteilung zu erfassen. Die Messstellen 62 können in einigen Ausführungformen der Erfindung jeweils ein Faser-Bragg-Gitter aufweisen, welche im Wellenlängenmultiplex und/oder im Zeitmultiplex über die Laufzeit des optischen Signals voneinander unterschieden und damit einer räumlichen Position innerhalb der Batterie 1 zugeordnet werden können. In anderen Ausführungformen der Erfindung können die Messstellen 62 thermochrom funktionalisiert sein. Dies kann beispielsweise durch Einbringen von zumindest einem Leukofarbstoff oder einem Flüssigkristall erfolgen. In einigen Ausführungformen der Erfindung können die Messstellen 62 so ausgebildet sein, dass diese bei Überschreiten einer vorgebbaren Temperatur irreversibel verfärbt werden, d.h. die Messstellen behalten die Farbgebung auch dann, wenn die Temperatur wieder sinkt. Die Messstellen 62 können in einem regelmäßigen Raster innerhalb der zweiten Polymerfolie 52 angeordnet sein. In anderen Ausführungformen der Erfindung können die Messstellen 62 über den Anschlusskontakten 25 der Batteriezellen angeordnet sein.

Weiterhin enthält die Batterie 1 zwei Druckplatten 3, nämlich eine obere Druckplatte 3a und eine untere Druckplatte 3b. Jede Druckplatte 3 weist eine erste Seite 31 und eine gegenüberliegende zweite Seite 32 auf. Die Druckplatten können mittels Gewindestangen 35 miteinander verspannt sein, so dass über die Druckplatten 3 jeweils eine Andruckkraft auf den Träger 5 mit den daran angebrachten Zellverbindern 4 aufgebracht wird. Hierdurch kann ein sicherer elektrischer Kontakt zwischen den Zellverbindern 4 bzw. den Kontaktelementen 45 und den Anschlusskontakten 25 der Batteriezellen 2 ausgeübt werden. Darüber hinaus kann die Druckplatte 3 dazu eingerichtet und bestimmt sein, die optische Messeinrichtung 6 mit der zweiten Polymerfolie 52 in thermischem Kontakt mit der ersten Polymerfolie 51 des Trägers 5 zu bringen.

Bei Betrieb der Batterie 1 kann Licht fortlaufend über die Lichtquelle 7 in den Wellenleiter 61 eingebracht und die transmittierte Leistung nach Intensität und/oder spektraler Zusammenfassung erfasst werden. Sofern zumindest eine Batteriezelle 2 eine unzulässig hohe Temperatur erreicht, verfärbt sich die in der Nähe der Batteriezelle 2 befindliche thermochrom funktionalisierte Messstelle 62. Dies kann durch ein verändertes Transmissionsverhalten des Wellenleiters 61 erkannt werden. Die Batterie 1 kann in diesem Fall außer Betrieb genommen werden oder über das Batteriemanagementsystem 49 automatisiert abgeschaltet werden.

Zur Reparatur der Batterie 1 müssen lediglich die Gewindestangen 35 gelöst werden, um die Druckplatte 3 zu entfernen. Sofern die Messstellen 62 so ausgebildet sind, dass diese sich irreversibel verfärben, kann sodann die schadhafte Batteriezelle 2, welche die Übertemperatur hervorgerufen hat, ohne weitere Messgeräte optisch detektiert werden. Da die Zellverbinder 4 nicht mit den Batteriezellen 2 verschweißt sind, können die erste und zweite Polymerfolie 51 und 52 einfach abgehoben werden, so dass die darunterliegenden Batteriezellen 2 zugänglich sind. Sodann kann die schadhafte Batteriezelle 2 werkzeuglos entnommen und durch eine neue Batteriezelle 2 ersetzt werden. Sodann können die Zellverbinder 4 mit dem Träger 5 wieder aufgelegt und eine neue optische Messeinrichtung 6 aufgelegt werden. Nach Anbringen der Druckplatte 3 und Verschrauben der Gewindestangen 35 ist die Batterie 1 wieder einsatzbereit.

Es ist darauf hinzuweisen, dass der Träger 5 optional ist und in einigen Ausführungformen der Erfindung auch entfallen kann. Darüber hinaus können statt ersten und zweiten Polymerfolien 51 und 52 auch nur eine einzelne Polymerfolie zur Anwendung kommen, welche sowohl den zur Überwachung der Batterie vorgesehenen Wellenleiter 61 als auch die Zellverbinder 4 trägt.

In gleicher Weise, wie für den an die untere Druckplatte 3b angrenzenden Teil der Batterie beschrieben, kann eine identische oder ähnliche Struktur aus Zellverbindern 4, Träger 5 und optischer Messeinrichtung 6 auch im oberen, an die obere Druckplatte 3a angrenzenden Teil der Batterie 1 vorhanden sein. Der Aufbau der Batterie 1 kann insofern symmetrisch sein.

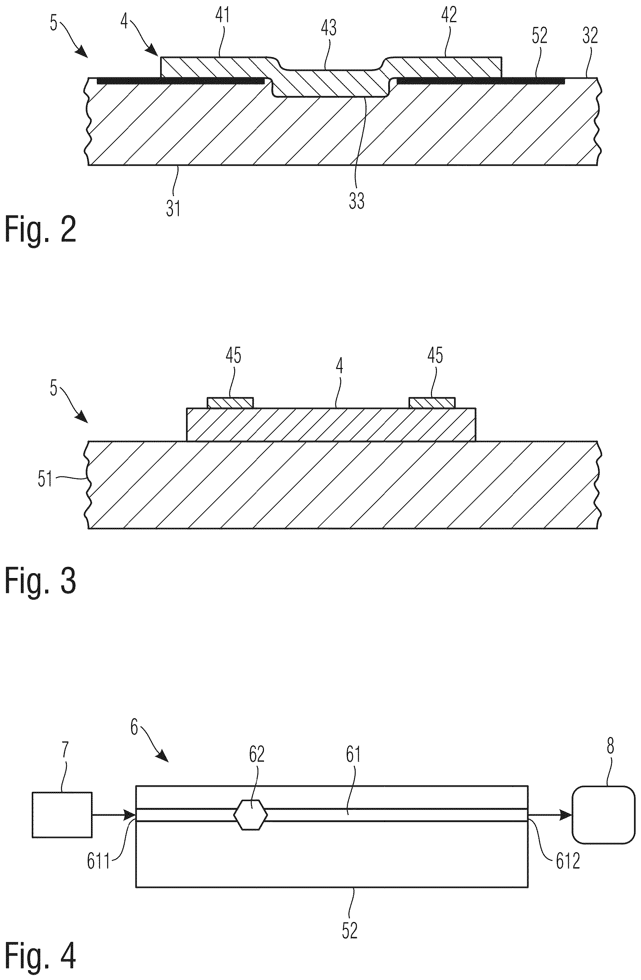

Anhand Figur 2 wird eine alternative Ausführungform einer Batterie 1 näher erläutert. Gleiche Bestandteile der Erfindung sind mit gleichen Bezugszeichen versehen, so dass sich die Beschreibung auf die wesentlichen Unterschiede beschränkt.

Figur 2 zeigt dementsprechend den Querschnitt durch einen Teil der Druckplatte 3 mit einer ersten Seite 31 und einer gegenüberliegenden zweiten Seite 32. Die zweite Seite 32 ist den Batteriezellen 2 zugewandt, wohingegen die erste Seite 31 die Außenseite der Batterie 1 bildet.

Wie Figur 2 zeigt, befinden sich in der Druckplatte 3 Ausnehmungen 33, welche dazu eingerichtet und bestimmt sind, einen Teil der Zellverbinder 4 aufzunehmen. Die Zellverbinder 4 sind im dargestellten Ausführungsbeispiel als Stanzteil aus einem Metallblech gefertigt und in einem Gesenk umgeformt. Die Zellverbinder 4 weisen eine gekröpfte Form auf, wobei ein erster Kontaktbereich 41 mit einem zweiten Kontaktbereich 42 über ein Verbindungsteil 43 miteinander verbunden ist. Das Verbindungsteil 43 ist zumindest teilweise in der Ausnehmung 33 aufgenommen, so dass die ersten und zweiten Kontaktbereiche 41 und 42 über den Verbindungsbereich 43 überstehen.

Durch die Ausnehmungen 33 können die Zellverbinder 4 zuverlässig positioniert werden, so dass auf den in Figur 1 gezeigten Träger 5 verzichtet werden kann.

Die optische Messeinrichtung 6 mit der zweiten Polymerfolie 52 ist in Figur 2 zwischen den Zellverbindern 4 und der zweiten Seite 32 der Druckplatte 3 eingelegt. Sofern die zweite Polymerfolie 52 zu den Ausnehmungen 33 korrespondierende Löcher aufweist, wird die optische Messeinrichtung 6 zuverlässig auf der Druckplatte 3 positioniert und durch die Zellverbinder 4 gehalten.

Figur 3 zeigt einen Ausschnitt aus dem Träger 5 mit den darauf angeordneten Zellverbindern 4, wie er in der Ausführungform gemäß Figur 1 verwendbar ist. Der Träger 5 enthält eine erste Polymerfolie 51, welche beispielsweise aus einem duroplastischen Harz mit oder ohne Faserverstärkung gefertigt sein kann. In anderen Ausführungformen der Erfindung kann die erste Polymerfolie 51 Polypropylen, Polyethylen, Acrylnitril-Butadien-Styren, Polyvinylchlorid und/oder ein thermoplastisches Elastomer enthalten oder daraus bestehen.

Die den Batteriezellen 2 zugewandte Seite der ersten Polymerfolie 51 enthält eine Mehrzahl von Zellverbindern 4. Die Zellverbinder 4 können in Form einer gesputterten, aufgedampften oder galvanisch verstärkten Metallschicht ausgeführt sein. In anderen Ausführungformen der Erfindung können die Zellverbinder 4 als Stanzteil aus einem Metallblech gefertigt und durch Kleben oder Löten mit der ersten Polymerfolie 51 verbunden sein.

In Figur 3 weisen die Zellverbinder 4 weiterhin Kontaktelemente 45 auf, welche dazu eingerichtet und bestimmt sind, mit den Anschlusskontakten 25 der Batteriezellen 2 einen elektrischen Kontakt auszubilden. Hierzu können die Anschlusskontakte 45 aus einer erhabenen Metallfläche aus einem duktilen Material bestehen, welche durch die von der Druckplatte 3 ausgeübte Andruckkraft plastisch verformt werden. In anderen Ausführungformen der Erfindung können die Kontaktelemente 45 Federelemente enthalten, welche die Anschlusskontakte 25 der Batteriezellen 2 formschlüssig umgreifen.

Figur 4 zeigt den Querschnitt durch eine optische Messeinrichtung 6. Diese enthält eine zweite Polymerfolie 52, welche aus den gleichen Materialien gefertigt werden kann wie die erste Polymerfolie 51.

In der zweiten Polymerfolie 52 ist ein Wellenleiter 61 eingebracht, beispielsweise durch mechanisches Prägen, durch Heißprägen oder durch optische Materialbearbeitung. Der erste Wellenleiter 61 enthält eine Mehrzahl optischer Messstellen 62, welche beispielsweise durch das lokale Einbringen thermochromer Farbstoffe gebildet wird. In Figur 4 ist eine einzelne Messstelle 62 dargestellt. In anderen Ausführungformen der Erfindung kann die Anzahl der Messstellen 62 erheblich größer sein. Figur 4 ist diesbezüglich lediglich erläuternd zu verstehen.

Der Wellenleiter 61 weist ein erstes Ende 611 und ein zweites Ende 612 auf. Über das erste Ende 611 wird Licht einer Lichtquelle 7 in den Wellenleiter 61 eingekoppelt, welches nachfolgend durch Totalreflexion zum zweiten Ende 612 geleitet wird. Dort tritt das Licht aus und erreicht einen optischen Detektor 8. Der Detektor 8 kann beispielsweise eine einfache Fotodiode sein, welche die Intensität des Lichtes erfasst. In anderen Ausführungformen der Erfindung kann der Detektor 8 auch ein Spektrometer enthalten, um die Wellenlänge oder die Wellenlängenverteilung zu analysieren. Darüber hinaus kann der Detektor 8 auch optische Filter oder ähnliche, an sich bekannte Elemente enthalten.

Sofern eine Übertemperatur im Bereich der Messstelle 62 auftritt, wird diese aufgrund des thermochromen Farbstoffes verfärbt. Dies führt zur Schwächung des am zweiten Ende 612 austretenden Lichtes und/oder zur Änderung der Wellenlängenverteilung des am zweiten Ende 612 des Wellenleiters 61 austretenden Lichtes. Diese Änderung wird vom Detektor 8 erfasst, so dass die Übertemperatur aufgrund einer Beschädigung einer einzelnen Batteriezelle 2 der Batterie 1 erkannt werden kann.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Aus-führungsform der Erfindung vorhanden ist. Dies schließt die Anwesenheit weiterer Merkmale nicht aus. Die nachfolgenden Ansprüche sind nicht so zu verstehen, dass ein genanntes Merkmaloder eine Merkmalskombination in jeder Aus-führungsform der Erfindung vorhanden sein muss. Sofern zu einem technischen Merkmal eine Funktion oder ein Vorteil genannt ist, schließt dies weitere, nicht genannte Funktionen oder Vorteile nicht aus. Ebenso muss sich diese Funktion oder dieser Vorteil nicht in allen Ausführungsformen gleichermaßen zeigen. Sofern die Ansprüche und die vorstehende Beschreibung "erste" und "zweite" Ausführungsformen oder Merkmale definieren, so dient diese Bezeichnung der Unter-scheidung zweier gleichartiger Ausführungsformen bzw. Merkmale, ohne eine Rangfolge festzulegen.

## Patentansprüche

1. Batterie (1) mit einer Mehrzahl von Batteriezellen (2), welche jeweils zumindest zwei Anschlusskontakte (25) aufweisen, wobei die Batteriezellen (2), mittels Zellverbindern (4) seriell und/oder parallel miteinander verschaltet sind,
**dadurch gekennzeichnet, dass**
die Zellverbinder (4) auf die Anschlusskontakte aufgelegt sind und mittels zumindest einer Druckplatte (3) mit einer Andruckkraft beaufschlagt werden.

2. Batterie nach Anspruch 1, **dadurch gekennzeichnet, dass** die Druckplatte (3) Ausnehmungen (33) aufweist, in welche die Zellverbinder (4) zumindest teilweise aufgenommen sind.

3. Batterie nach Anspruch 1 oder 2, **dadurch gekennzeichnet**, die Zellverbinder (4) Kontaktelemente (45) aufweisen, welche mit den zugeordneten Anschlusskontakten (25) der Batteriezellen (2) formschlüssig verbunden sind.

4. Batterie nach einem der Ansprüche 1 bis 3, **dadurch gekennzeichnet, dass** die Batteriezellen (2) Rundzellen sind und/oder
dass die Batteriezellen (2) ausgewählt sind aus einer Natrium-Ionen-Batteriezelle oder einer Lithium-Ionen-Batteriezelle oder einer Lithium-Eisenphosphat-Batteriezelle.

5. Batterie nach einem der Ansprüche 1 bis 4, **dadurch gekennzeichnet, dass** eine Mehrzahl von Zellverbindern (4) mit einem Träger (5) verbunden sind oder
dass eine Mehrzahl von Zellverbindern (4) mit einem Träger (5) verbunden sind, welcher eine erste Polymerfolie (51) enthält oder daraus besteht oder dass eine Mehrzahl von Zellverbindern (4) durch eine strukturierte Metallschicht auf dem Träger (5) gebildet ist, wobei der Träger eine erste Polymerfolie (51) enthält oder daraus besteht oder
dass eine Mehrzahl von Zellverbindern (4) durch eine strukturierte Metallschicht auf dem Träger (5) gebildet ist, wobei der Träger eine erste Polymerfolie (51) enthält oder daraus besteht und die Metallschicht Nickel enthält oder daraus besteht.

6. Batterie Anspruch 5, **dadurch gekennzeichnet, dass** die erste Polymerfolie (51) weiterhin eine optische Messeinrichtung (6) enthält, welche zumindest einen Wellenleiter (61) und zumindest eine temperaturempfindliche Messstelle (62) enthält.

7. Batterie nach einem der Ansprüche 1 bis 5, weiterhin enthaltend eine zweite Polymerfolie (52), welche eine optische Messeinrichtung (6) enthält, welche zumindest einen Wellenleiter (61) und zumindest eine Messstelle (62) enthält.

8. Batterie nach einem der Ansprüche 6 oder 7, **dadurch gekennzeichnet, dass** der zumindest eine Wellenleiter (61) ein Multimode-Wellenleiter ist und/oder dass der zumindest eine Wellenleiter (61) durch Prägen in die erste und/oder zweite Polymerfolie (51, 52) eingebracht ist.

9. Batterie nach einem der Ansprüche 6 bis 8, **dadurch gekennzeichnet, dass** die Messstelle (62) temperaturempfindlich ist und/oder
dass die Messtelle (62) thermochrom funktionalisiert ist und/oder
dass die Messtelle (62) zumindest einen Leukofarbstoff oder ein Flüssigkristall enthält und/oder
dass die Messtelle (62) bei Überschreiten einer vorgebbaren Temperatur irreversibel verfärbt wird.

10. Batterie nach einem der Ansprüche 5 bis 9, **dadurch gekennzeichnet, dass** die erste und/oder zweite Polymerfolie (51, 52) ein Kunstharz oder eine thermoplastische Matrix enthält oder
dass die erste und/oder zweite Polymerfolie (51, 52) Polypropylen, Polyethylen, Acrylnitril-Butadien-Styren, Polyvinylchlorid und/oder zumindest ein thermoplastisches Elastomer enthält oder daraus besteht.

11. Batterie nach einem der Ansprüche 6 bis 10, **dadurch gekennzeichnet, dass** die Messstellen (62) über den Anschlusskontakten (25) der Batteriezellen (2) angeordnet sind.

12. Batterie nach einem der Ansprüche 6 bis 11, **dadurch gekennzeichnet, dass** der Wellenleiter (61) ein erstes Ende (611) aufweist, welches mit einer breitbandigen Lichtquelle (7) gekoppelt ist und ein zweites Ende (612) aufweist, welches mit einem optischen Detektor (8) gekoppelt ist oder
dass der Wellenleiter (61) ein erstes Ende (611) aufweist, welches mit einer breitbandigen Lichtquelle (7) und einem optischen Detektor (8) gekoppelt ist und das zweite Ende (612) verspiegelt ist.

13. Verfahren zur Überwachung einer Batterie nach einem der Ansprüche 6 bis 12, aufweisend die folgenden Schritte:
Einkoppeln von Licht in ein erstes Ende (611) von zumindest einem Wellenleiter (61);
Erfassen des aus dem Wellenleiter (61) austretenden Lichtes und Bestimmen einer Intensitätsänderung über der Zeit.
